Europäisches Patentamt

European Patent Office

Office européen des brevets

(11) Publication number: **0 056 685**
**B1**

(12) **EUROPEAN PATENT SPECIFICATION**

(45) Date of publication of patent specification: **24.10.84**

(21) Application number: **82300054.2**

(22) Date of filing: **06.01.82**

(51) Int. Cl.³: **B 42 F 15/00, G 11 B 23/02**

(54) **Folder.**

(30) Priority: **16.01.81 US 225595**

(43) Date of publication of application:
**28.07.82 Bulletin 82/30**

(45) Publication of the grant of the patent:
**24.10.84 Bulletin 84/43**

(84) Designated Contracting States:
**BE DE FR GB NL**

(56) References cited:
**DE-U-7 434 865**
**FR-A-1 162 307**
**FR-A-1 330 815**
**FR-A-2 044 206**
**US-A-2 948 402**
**US-A-3 942 639**

(73) Proprietor: **ACCO WORLD CORPORATION**
**770 South Acco Plaza**
**Wheeling Illinois (US)**

(72) Inventor: **Holland, James Francis**
**2315 Crabtree Lane**
**Northbrook Illinois (US)**

(74) Representative: **Alexander, Thomas Bruce et al**
**Boult, Wade & Tennant 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to folders. In particular, it relates to folders for storing magnetic media, such as diskettes, floppy discs and mag cards, together with the materials relating thereto, such as correspondence and other documentation papers.

In recent years there has been a tremendous increase in the use of magnetic media, such as diskettes, floppy discs, or mag cards. This creates a need for storing such media in an efficient manner. Frequently, papers and other materials need to be stored together with such magnetic media. For such storage the prior art provides plastic folders containing single pockets for storing both the medium and the related papers. The folder is suspended at its upper corners on a frame and the diskette or another medium and the related papers are stored together in the pocket. Hereinafter the references will be made to diskettes as a primary example of magnetic media. The prior art single pocket folders permit the storage of diskettes together with the related papers but they suffer from several disadvantages.

Specifically, the papers inserted next to the diskette tend to distort the diskette, especially if the folder is overstuffed with paper. Such distortion can cause a permanent bending or warping of the diskette which in turn could destroy the usefulness thereof. Such arrangement has been described in DE—U—7.434.865.

Another disadvantage of the prior art single pocket folders is that static electricity can be created by the paper. This static electricity is transmitted to the diskette which can damage the recording.

There is therefore a need for a folder for storing diskettes and related papers which would not suffer from above-state disadvantages.

The invention provides a folder for storing diskettes and related papers comprising: a folder stock having a first sheet and a second sheet joined together to form a bottom, said first sheet having a first upper end and said second sheet having a second upper end; a panel; means for securing the panel to said second upper end on the side of said second sheet opposite from said first sheet; means for suspending said folder such that said first and said second ends of said folder stock are above said bottom and said panel extends in a generally vertical direction; and means for holding diskettes on the side of the panel opposite from said folder stock.

The two ends of the folder may be secured to rails which suspend the folder from frames, such that papers and other materials can be stored in the folder stock. The panel may be mounted in the vicinity of one end of the folder stock, and preferably extends downward in a generally vertical direction. At least one pocket may be provided on the side of the panel opposite to the folder stock to accommodate diskettes which are related to the papers stored in the folder stock.

The invention further provides a folder for storing diskettes and related papers comprising: a paper folder stock having a rectangular first sheet and a rectangular second sheet, said sheets being joined together to form a bottom, said first sheet having a first upper end, said second sheet having a second upper end; a plastic panel having at least one pocket therein for holding diskettes; a first rail for securing said plastic panel to said second upper end such that said panel is on the side of said second sheet opposite from said first sheet and said pocket is on the side of said panel opposite from said second sheet; a second rail secured to said second upper end; a first set of glides secured to and extending on either side of said first upper end; a second set of glides secured to and extending on either side of said second upper end, said first and said second set of glides being provided for suspending said folder on a wire frame such that said bottom is below said first and second upper ends and a storage space is formed between said first and said second sheets, and such that said plastic panel extends from said first rail in a generally vertical direction so that diskettes placed in said pockets are not distorted by paper materials stored in said folder stock and static electricity is not transmitted from said paper matreials to diskettes stored in said panel.

The folder of the present invention permits keeping diskettes with the related papers without subjecting the diskettes to distortion or warping. The folder also eliminates transmittal of static electricity from the papers to the diskettes stored in the same folder.

Preferred embodiments of the invention will now be described, by way of example, with reference to the accompanying drawings, in which:

Figure 1 is a perspective view of a folder constructed in accordance with the present invention,

Figure 2 is a cross-sectional view of the folder of Figure 1 taken along line 2—2 thereof, and

Figure 3 is a front view of another folder constructed in accordance with the present invention.

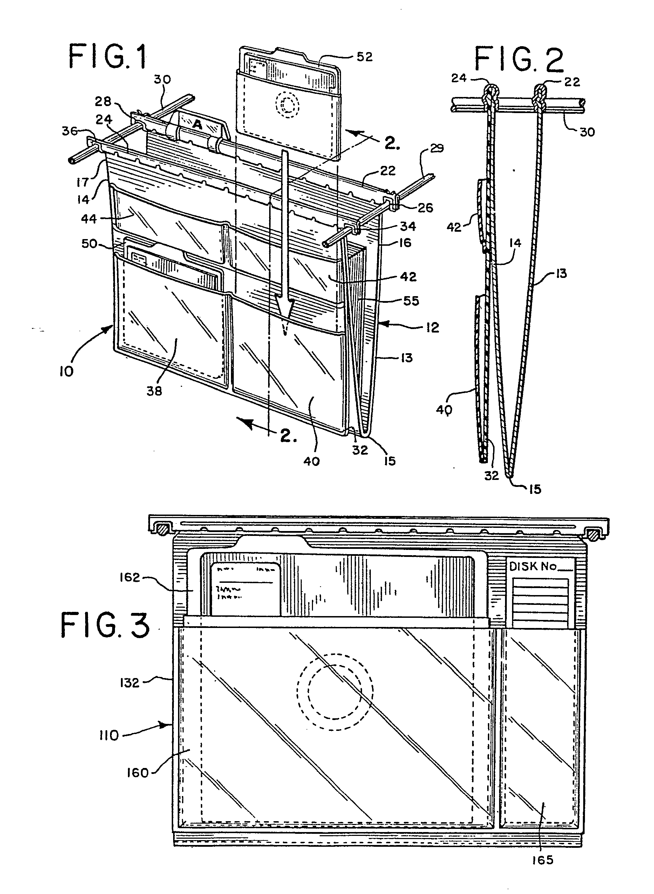

Referring now to Figure 1, the improved folder of the present invention is designated generally by a numeral 10. The folder includes a folder stock 12 which is made of first and a second rectangular sheets 13 and 14, respectively, which are joined together to form a bottom 15. The first sheet has a first upper end 16. The second sheet has an upper end 17. The bottom 17 is situated beneath the two ends 16 and 17.

The end 16 is mounted to a rail 22. The rail 22 includes at both ends nylon glides 26 and 28, which permit sliding of the rail along wire frames 29 and 30.

The end 17 and an upper end of a rectangular panel 32 are secured to a rail 24 which extends between wire frames 28, 30 and is slidingly mounted thereon by nylon glides 34 and 36. The plastic panel 32 includes pockets 38, 40, 42 and 44. The pockets 38 and 40 accomodate diskettes such as diskettes 50 and 52. The pockets 42 and 44 are provided for indexing. The papers related to the diskettes are stored in the space defined between the two vertical sheets 13 and 14 of the folder stock 12. Thus, the folder 10 permits storage of the diskettes together with the related papers.

As can be seen from Fig. 2, the plastic panel 32 and the diskettes stored therein are not distorted by papers placed in the folder stock. Even a large volume of papers does not cause bending or warping of the diskette as the panel 32 is free to rotate about the rail 24. This feature of the invention assures that the diskettes are not distorted and are not subsequently permanently warped because of the papers stored in the folder. Additionally, since the papers stored in the folder stock are separated from the diskettes by the folder stock and by the plastic panel, the static electricity is not transmitted to the diskettes.

As shown in Fig. 2, the folder 10 of the preferred embodiment of the invention depicted in Figures 1—2 is made of the following materials. The folder stock 12 is made of paper. The rectangular plastic panel 32 contains antistatic agents and therefore it further reduces the risk that static electricity could be transmitted from the papers to the diskettes stored in the same folder. The panel 32 is made of rigid vinyl and pockets 38, 40, 42, and 44 are made of flexible vinyl. The rails 22 and 24 are constructed of metal.

The second embodiment of the present invention is depicted in Fig. 3. The folder 110 is substantially identical to that shown in Figures 1 and 2 except that it contains a single diskette pocket 160 in the panel 132 which is secured to the rest of the folder 110 in the same manner as panel 32 is secured to the rest of the folder 10. The pocket 160 accommodates a large diskette 162. The folder 110 also includes an indexing pocket 165.

**Claims**

1. A folder for storing diskettes and related papers comprising:

a folder stock (12) having a first sheet (13) and a second sheet (14) joined together to form a bottom (15), said first sheet (13) having a first upper end (16) and said second sheet (14) having a second upper end (17);
a panel (32);
means for securing (24) the panel to said second upper end on the side of said second sheet opposite from said first sheet;
means for suspending (26, 28, 34, 36) said folder such that said first and said second ends of said folder stock are above said bottom and said panel extends in a generally vertical direction; and
means for holding (38—42) diskettes (50) on the side of the panel opposite from said folder stock.

2. The folder of claim 1 wherein said securing means comprises a rail (24).

3. The folder of claim 1 wherein said means for suspending comprises glides (26, 28, 34, 36).

4. The folder of claim 1 wherein said holding means comprises at least one pocket (38—42, 160).

5. The folder of claim 1 wherein said panel (32) is made of plastic.

6. The folder of claim 1 wherein said folder stock (12) is made of paper.

7. The folder of claim 1 wherein said first (13) and said second sheets (14) are rectangular in shape.

8. A folder for storing diskettes and related papers comprising:

a paper folder stock (12) having a rectangular first sheet (13) and a rectangular second sheet (14), said sheets being joined together to form a bottom (15), said first sheet (13) having a first upper end (16), said second sheet (14) having a second upper end (17);
a plastic panel (32) having at least one pocket (38—42; 160) therein for holding diskettes (50);
a first rail (24) for securing said plastic panel to said second upper end (17) such that said panel (32) is on the side of said second sheet opposite from said first sheet and said pocket is on the side of said panel opposite from said second sheet;
a second rail (22) secured to said first upper end;
a first set of glides (26, 28) secured to and extending on either side of said first upper end (16);
a second set of glides (34, 36) secured to and extending on either side of said second upper end (17), said first and said second set of glides being provided for suspending said folder on a wire frame (29, 30) such that said bottom is below said first and said second upper ends and a storage space is formed between said first and said second sheets, and such that said plastic panel (32) extends from said first rail in a generally vertical direction so that diskettes placed in said pockets are not distorted by paper materials stored in said folder stock and static electricity is not transmitted from said paper materials to diskettes stored in said panel.

**Patentansprüche**

1. Ordner zum Aufbewahren von Disketten und zugehörigen Papieren mit:

einem Ordnerfach (12), das ein erstes Blatt (13) und ein zweiten Blatt (14) umfaßt, welche miteinander verbunden sind, um einen Boden (15) zu bilden, wobei das erste Blatt (13) ein erstes oberes Ende (16) und das zweite Blatt, (14) ein zweites oberes Ende (17) aufweist;
einer Platte (32);
Einrichtungen zur Befestigung (24) der Platte an dem zweiten oberen Ende auf der dem ersten Blatt gegenüberliegenden Seite des zweiten Blatts;
Einrichtungen zur Aufhängung (26, 28, 34, 36) des Ordners derart, daß das erste und das zweite Ende des Ordnerfachs über dem Boden sind und sich die Platte in einer im wesentlichen vertikalen Richtung erstreckt; und
Einrichtungen zum Haltern (38 bis 44) von Disketten (50) an der dem Ordnerfach gegenüberliegenden Seite der Platte.

2. Ordner nach Anspruch 1, bei dem die Befestigungseinrichtung eine Schiene (24) aufweist.

3. Ordner nach Anspruch 1, bei dem die Aufhängeeinrichtung Gleiter (26, 28, 34, 36) aufweist.

4. Ordner nach Anspruch 1, bei dem die Haltereinrichtung mindestens eine Tasche (38 bis 42, 160) aufweist.

5. Ordner nach Anspruch 1, bei dem die Platte (32) aus Kunststoff hergestellte ist.

6. Ordner nach Anspruch 1, bei dem das Ordnerfach (12) aus Papier hergestellt ist.

7. Ordner nach Anspruch 1, bei dem das erste (13) und das zweite Blatt (14) rechtwinklig gestaltet sind.

8. Ordner zum Aufbewahren von Disketten und zugehörigen Papier mit:

einem Papierordnerfach (12), das ein rechteckiges erstes Blatt (13) und ein rechteckiges zweites Blatt )14) umfaßt, die miteinander verbunden sind, um einen Boden (15) zu bilden, wobei das erste Blatt (13) ein erstes oberes Ende (16) und das zweite Blatt (14) ein zweites oberes Ende (17) aufweist;
einer Kunstoffplatte (32), die zum Haltern von Disketten (50) daran wenigstens eine Tasche (38 bis 42, 160) aufweist;
einer ersten Schiene (24) zur Befestigung der Kunststoffplatte an dem zweiten oberen Ende (17), so daß die Platte (32) an der dem ersten Blatte gegenüberliegenden Seite des zweiten Blatts ist und die Tasche auf der dem zweiten Blatt gegenüberliegenden Seite der Platte ist;
einer zweiten Schiene (22), die an dem ersten oberen Ende befestigt ist;
einem ersten Satz von Gleiter (26, 28), die an einer von beiden Seiten des ersten oberen Endes (16) befestigt ist und sich auf eine der beiden Seiten des ersten oberen Endes (16) erstreckt;
einem zweiten Satz von Gleitern (34, 36), der an einer von beiden Seiten des zweiten oberen Endes (17) befestigt ist und sich auf eine von beiden Seiten des zweiten obheren Endes (17) erstreckt, wobei der erste und der zweite Satz Gleiter zum Aufhängen des Ordners an einem Drahtgestell (29, 30) derart vorgesehen sind, daß der Boden unterhalb des ersten und des zweiten oberen Endes ist und ein Aufbewahrungsraum zwischen dem ersten und dem zweiten Blatt gebildet ist, und derart, daß die Kunstoffplatte (32) sich von der ersten Schiene in einer im wesentlichen vertikalen Richtung erstreckt, so daß in den Taschen angeordnete Disketten nicht durch in dem Ordnerfach aufbewahrte papierne Materialien verwunden werden und statische Elektrizität von den papierenen Materialien nich zu den in der Platte aufbewahrten Disketten übertragen wird.

**Revendications**

1. Classeur destiné à conserver des minidisques (ou disquettes) et papiers apparentés, comprenant:

une matière (12) pour formation de classeur, comportant une première feuille (13) et une seconde feuille (14) jointes ensemble de manière à former un fond (15), ladite première feuille (13) ayant une première extrémité supérieure (16) et ladite seconde feuille (14) ayant une seconde extrémité supérieure (17);
un panneau (32);
un moyen pour fixer (24) le panneau à ladite seconde extrémité supérieure du côté de ladite seconde feuille opposé à ladite première feuille;
un moyen pour suspendre (26, 28, 34, 36) ce classeur de manière que lesdites première et seconde extrémités de la matière de formation du classeur se trouvent au-dessus du fond et que le panneau s'étende dans une direction généralement verticale; et
un moyen pour contenir (38—44) des minidisques (50) sur la côté du panneau opposé à ladite matière de formation d'un classeur.

2. Classeur selon la revendication 1, caractérisé en ce que le moyen de fixation comprend une baguette (24).

3. Classeur selon la revendication 1, dans lequel le moyen de suspension comprend des étriers coulissants (26, 28, 34, 36).

4. Classeur selon la revendication 1, dans lequel le moyen de conservation comprend au moins une poche (38 à 42, 160).

5. Classeur selon la revendication 1, dans lequel le panneau (32) est en une matière plastique.

6. Classeur selon la revendication 1, dans lequel la matière (12) de formation du classeur est en papier.

7. Classeur selon la revendication 1, dans lequel lesdites première (13) et seconde (14) feuilles sont de forme rectangulaire.

8. Classeur pour conserver des minidisques et papiers apparentés, comprenant:

une matière (12) en papier pour classeur comportant une première feuille (13) rectangulaire et une seconde feuille (14) rectangulaire, lesdites feuilles étant jointes ensemble pour former un fond (15), ladite première feuille (13) comportant une première extrémité supérieure (16); ladite seconde feuille (14) comportant une seconde extrémité supérieure (17);

un panneau (32) en matière plastique comportant au moins une poche (38 à 42; 160) pour contenir des minidisques (50);

une première baguette (24) pour fixer le panneau de matière plastique à la seconde extrémité supérieure (17), de manière que ce panneau (32) se trouve du côté de la seconde feuille opposé à ladite première feuille et que la poche se trouve sur la côté du panneau opposé à ladite seconde feuille;

une seconde baguette (22) fixée à ladite première extrémité;

un premier groups d'étriers coulissants (26, 28) fixés à ladite première extrémité (16) et s'étendant de chaque côté de celle-ci;

un second groupe d'étriers coulissants (34, 36) fixés à ladite seconde extrémité supérieure (17) et s'étendant de chaque côté de celle-ci, ces premier et second groupes d'étriers coulissants étant destinés à suspendre le classeur à un cadre comportant des tiges de glissière (29, 30), de manière que ledit fond se trouve sous lesdites première et seconde extrémités supérieures et qu'un espace de stockage soit formé entre lesdites première et seconde feuilles, et de manière que ledit panneau (32) en matière plastique s'étende, à partir de ladite première baguette, dans une direction généralement verticale de façon que les minidisques placés dans lesdites poches ne soient pas déformés par les matières de papier conservées dans ladite matière pour classeur et que l'électricité statique ne soit pas transmise de ces matières en papier aux minidisques conservés dans ledit panneau.

FIG.1

52

30
28
24
36
A
17
14
44
50
10
38
29
22
26
34
16
42
55
12
13
40
32
15
2.
2.

FIG.2

24
22
30
42
14
13
40
32
15

FIG.3

162
132
110
160

DISK No___

165